# EUROPEAN PATENT APPLICATION

(11) **EP 4 733 030 A1**
(43) Date of publication of application: **29.04.2026**
(21) Application number: 24839491.8
(22) Date of filing: 24.06.2024
(51) Int. Cl.: B29C 43/12, B29C 43/32, B29C 70/44

(54) **MOLDED ARTICLE PRODUCTION METHOD AND MOLDED ARTICLE PRODUCTION APPARATUS**

(30) Priority: 13.07.2023 JP 2023115302
(71) Applicant: Mitsubishi Heavy Industries, Ltd., Chiyoda-ku Tokyo 100-8332 (JP)
(72) Inventor: MATSUMOTO Kensuke, Tokyo 100-8332 (JP); NOMA Kazuki, Tokyo 100-8332 (JP); NAGANAWA Wataru, Tokyo 100-8332 (JP); KATO Makoto, Tokyo 100-8332 (JP); TAKEUCHI Hiromasa, Tokyo 100-8332 (JP); SHINOHARA Takumi, Tokyo 100-8332 (JP); KANEMASU Masayuki, Tokyo 100-8332 (JP)
(74) Representative: Hoffmann Eitle
(86) International application number: PCT/JP2024/022761
(87) International publication number: WO 2025/013595

(57) **Abstract**

To provide a molded product manufacturing method which makes it possible to suppress variations in the forming quality of members being processed. This manufacturing method comprises a disposition step for disposing a member being processed (20) on a forming die (10), a supply step for supplying a bladder with a fluid above the member being processed, and a lowering step for lowering a bladder (30). The member being processed is sheet-shaped and has a greater area than an upper face of the forming die. The bladder is such that an opening of a rigid box is covered by a stretchable sheet-like member. In the supply step and the lowering step, a regulating member is used which, as the bladder lowers, prevents a region in which the bladder expands from protruding from a region in which the bladder makes contact with the member being processed.

## Description

### Technical Field

The present disclosure relates to a molded product manufacturing method and a molded product manufacturing apparatus.

### Background Art

For example, PTL 1 describes a technique of forming a composite material by pressing a bladder from an upper portion of the composite material arranged on a forming mandrel.

### Citation List

### Patent Literature

[PTL 1] Japanese Patent No. 6892230

### Summary of Invention

### Technical Problem

In a forming process using a bladder, it is difficult to control the bladder in order to stabilize a quality of a molded product.

### Solution to Problem

According to one aspect of the present disclosure, a molded product manufacturing method is provided. A molded product manufacturing method including: an arrangement step of arranging a workpiece member to come into contact with a surface of a mold tool; a supply step of supplying a fluid to a bladder at a side of the workpiece member opposite to the mold tool; and a displacement step of displacing the bladder toward the workpiece member. The workpiece member is a sheet-like member having an area larger than an area of the surface of the mold tool. The bladder includes a box portion made of a rigid body and an opening of the box portion is covered with a sheet-like member that is stretchable. In the supply step and the displacement step a restricting member is used for suppressing that a region in which the bladder expands protrudes outside a region in which the bladder contacts the workpiece member in accordance with displacement of the bladder.

### Brief Description of Drawings

FIG. 1 is a cross-sectional view showing a configuration of a manufacturing apparatus for a molded product according to a first embodiment.
FIG. 2 is a plan view showing a planar configuration of the mold tool according to the same embodiment.
FIG. 3 is a plan view of the restricting member according to the same embodiment.
FIG. 4 is a flowchart showing a step for manufacturing the molded product according to the same embodiment.
FIG. 5 is a cross-sectional view showing a step for manufacturing a molded product according to the same embodiment.
FIG. 6 is a side view showing the step for manufacturing the molded product according to the same embodiment.
FIG. 7 is a cross-sectional view showing a step for manufacturing a molded product according to the same embodiment.
FIG. 8 is a cross-sectional view showing the step for manufacturing the molded product according to the same embodiment.
FIG. 9 is a cross-sectional view showing the step for manufacturing the molded product according to the same embodiment.
FIG. 10 is a cross-sectional view showing the step for manufacturing the molded product according to the same embodiment.
FIG. 11 is a side view showing the step for manufacturing the molded product according to the same embodiment.
FIG. 12 is a plan view showing a planar configuration of the restricting member according to the second embodiment.
FIG. 13 is a cross-sectional view showing the step for manufacturing the molded product according to the same embodiment.
FIG. 14 is a flowchart showing the step for manufacturing the molded product according to the same embodiment.
FIG. 15 is a cross-sectional view showing the step for manufacturing the molded product according to the third embodiment.
FIG. 16 is a cross-sectional view showing the step for manufacturing the molded product according to the same embodiment.
FIG. 17A is a cross-sectional view showing the step for manufacturing the molded product according to the fourth embodiment.
FIG. 17B is a cross-sectional view showing the step for manufacturing the molded product according to the same embodiment.
FIG. 17C is a cross-sectional view showing the step for manufacturing the molded product according to the same embodiment.
FIG. 17D is a cross-sectional view showing the step for manufacturing the molded product according to the same embodiment.
FIG. 18A is a cross-sectional view showing a cross-sectional configuration of a manufacturing apparatus according to a modification example of the same embodiment.
FIG. 18B is a cross-sectional view showing a cross-sectional configuration of a manufacturing apparatus according to a modification example of the same embodiment.

### Description of Embodiments

### <First Embodiment>

Hereinafter, a first embodiment will be described with reference to the drawings.

### "Manufacturing Apparatus"

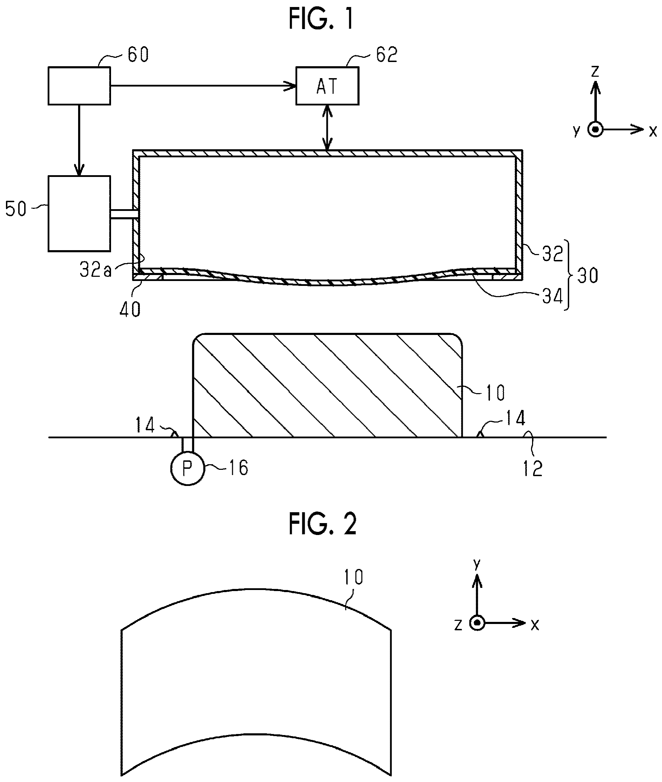

FIG. 1 shows a manufacturing apparatus for a molded product. In FIG. 1, a vertical upward direction is defined as a z-axis, and a horizontal direction is defined as an x-axis direction and a y-axis direction.

As shown in FIG. 1, the manufacturing apparatus includes a mold tool 10 disposed on a floor 12. A protruding portion 14 is provided around the mold tool 10 on the floor 12. In addition, a vacuum port of a pump 16 is disposed at a position closer to the mold tool 10 than the protruding portion 14 on the floor 12.

FIG. 2 shows a plan view of the mold tool 10 as viewed from above. In the present embodiment, as an example, since the molded product has an arch shape, an upper surface shape of the mold tool 10 is an arch shape.

Returning to FIG. 1, the manufacturing apparatus includes a bladder 30. The bladder 30 includes a box portion 32 and a flexible sheet 34. The box portion 32 is a rigid body. The box portion 32 includes an opening portion 32a. The opening portion of the box portion 32 is covered with the flexible sheet 34. The flexible sheet 34 is a stretchable sheet-like member.

A fluid is supplied to the bladder 30 from a fluid supply device 50. The fluid may be, for example, air. In addition, for example, the fluid may be a rare gas. In addition, the fluid is not limited to a gas, and may be a liquid. The pressure in the bladder 30 is increased by supplying the fluid from the fluid supply device 50 to the bladder 30. The volume of the bladder 30 is expanded by stretching the flexible sheet 34 of the bladder 30. That is, the bladder 30 is expanded.

However, the stretching of the flexible sheet 34 is restricted by a restricting member 40.

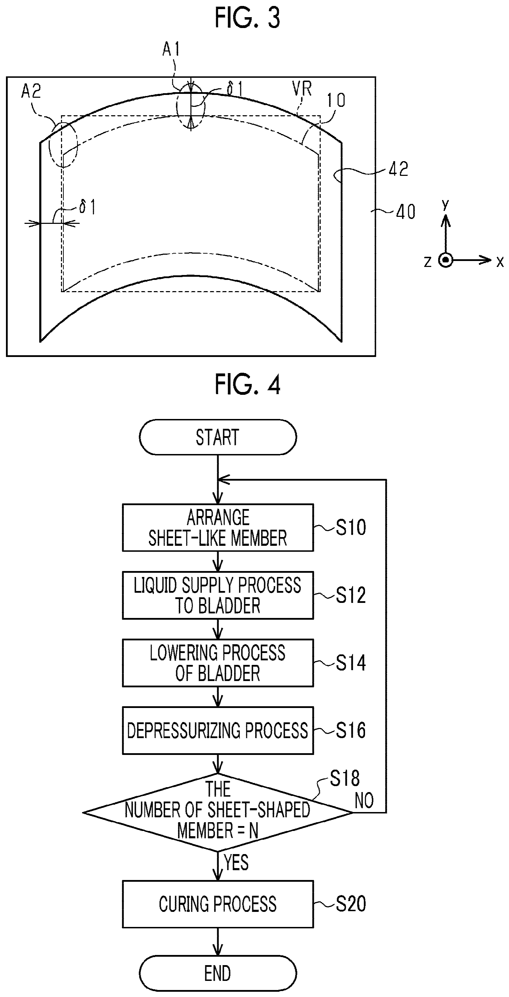

FIG. 3 shows a planar configuration of the restricting member 40.

As shown in FIG. 3, the restricting member 40 includes an opening portion 42. The opening portion 42 has a shape similar to an upper surface of the mold tool 10. This is a setting for suppressing a variation in a distance between the edge portion of the opening portion 42 of the restricting member 40 and the mold tool 10. FIG. 3 shows that the distances between the restricting member 40 and the mold tool 10 in the X direction and the Y direction at two positions different from each other are equal to each other and are a distance δ1.

In FIG. 3, the upper surface of the mold tool 10 is shown by a two-dot chain line. In addition, in FIG. 3, a virtual rectangle VR in which the upper surface of the mold tool 10 is inscribed is shown. As shown in FIG. 3, a length in a direction from the edge portion of the opening portion 42 toward the periphery of the virtual rectangle VR in a direction from the edge portion of the opening portion 42 toward the inside of the opening portion 42, is smaller at locations where the distance between the virtual rectangle VR and the upper surface of the mold tool 10 is larger than at locations where the distance is smaller. The length in the direction from the edge portion of the opening portion 42 toward the periphery of the virtual rectangle VR is a length in a direction orthogonal to the side of the virtual rectangle VR. In addition, the distance between the virtual rectangle VR and the upper surface of the mold tool 10 is a length of a perpendicular line from the upper surface of the mold tool 10 to a side of the virtual rectangle VR.

FIG. 3 shows a portion A1 where the distance between the virtual rectangle VR and the upper surface of the mold tool 10 is small and a portion A2 where the distance between the virtual rectangle VR and the upper surface of the mold tool 10 is large. The length in the direction from the edge portion of the opening portion 42 toward the periphery of the virtual rectangle VR in the portion A2 is negative.

Returning to FIG. 1, the manufacturing apparatus comprises a control device 60. The control device 60 controls the fluid supply device 50 and the bladder 30. The control device 60 operates the fluid supply device 50 to control the amount of the fluid to be filled in the bladder 30. The control device 60 operates an actuator 62 that displaces the bladder 30 to control the displacement of the bladder 30. In addition, the control device 60 operates the pump 16 to depressurize a space, which will be described below, partitioned by the bladder 30 and the floor 12.

The control device 60 comprises a PU and a storage device. The PU is, for example, a software processing device such as a CPU, a GPU, and a TPU. The storage device may be an electrically non-rewritable non-volatile memory. In addition, the storage device may be a storage medium such as an electrically rewritable non-volatile memory and a disk medium.

### "Step for manufacturing"

FIG. 4 shows a step for manufacturing the molded product.

The molded product according to the present embodiment is obtained by forming a composite material consisting of a thermosetting resin and carbon fiber. Specifically, the mold tool is obtained by forming a sheet-like member which is a prepreg as the sheet-like composite material.

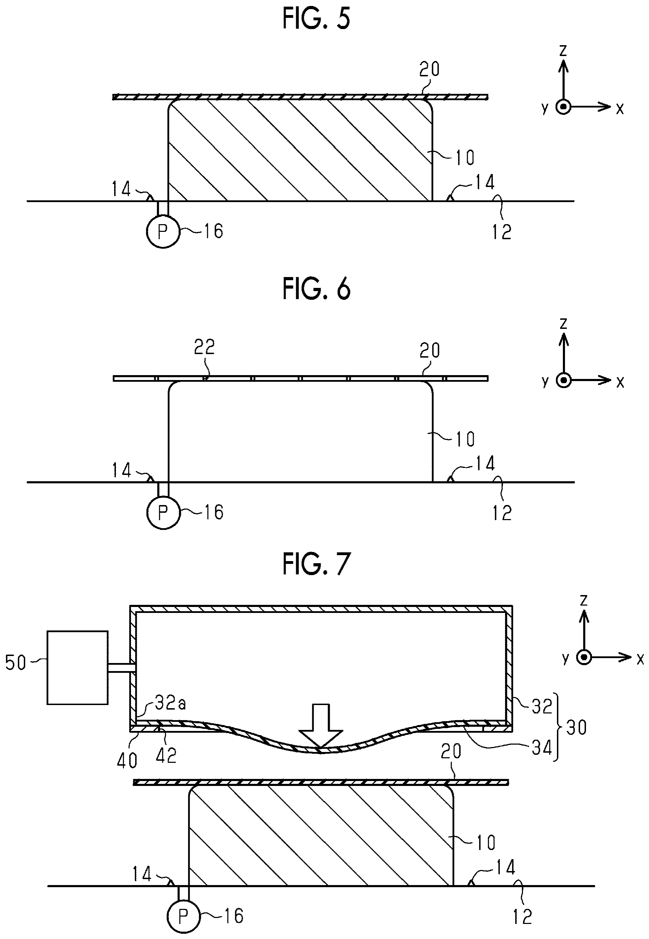

In the series of steps shown in FIG. 4, the control device 60 arranges the sheet-like member 20 on the mold tool 10 (S10) as shown in FIGs. 5 and 6. This processing may be realized by moving the sheet-like member 20 by the control device 60 using a robot arm or the like.

FIG. 5 is a cross-sectional view of the mold tool 10 and the sheet-like member 20 in a state where the sheet-like member 20 is arranged on the mold tool 10. The sheet-like member 20 covers the entire upper surface of the mold tool 10.

FIG. 6 is a side view of the mold tool 10 and the sheet-like member 20 in a state where the sheet-like member 20 is arranged on the mold tool 10.

As shown in FIG. 6, a plurality of slits 22 are provided at an end part of the sheet-like member 20. This is a setting for easily bending the sheet-like member 20 at a portion in contact with an edge portion of the upper surface of the mold tool 10.

Returning to FIG. 4, the control device 60 supplies a fluid to a bladder for pressing the sheet-like member 20 from above (S12).

FIG. 7 shows the step S12. As shown in FIG. 7, the flexible sheet 34 of the bladder 30 protrudes downward from the opening portion 42 of the restricting member 40 with the expansion.

Returning to FIG. 4, the control device 60 causes the bladder 30 to descend toward the mold tool 10 (S14).

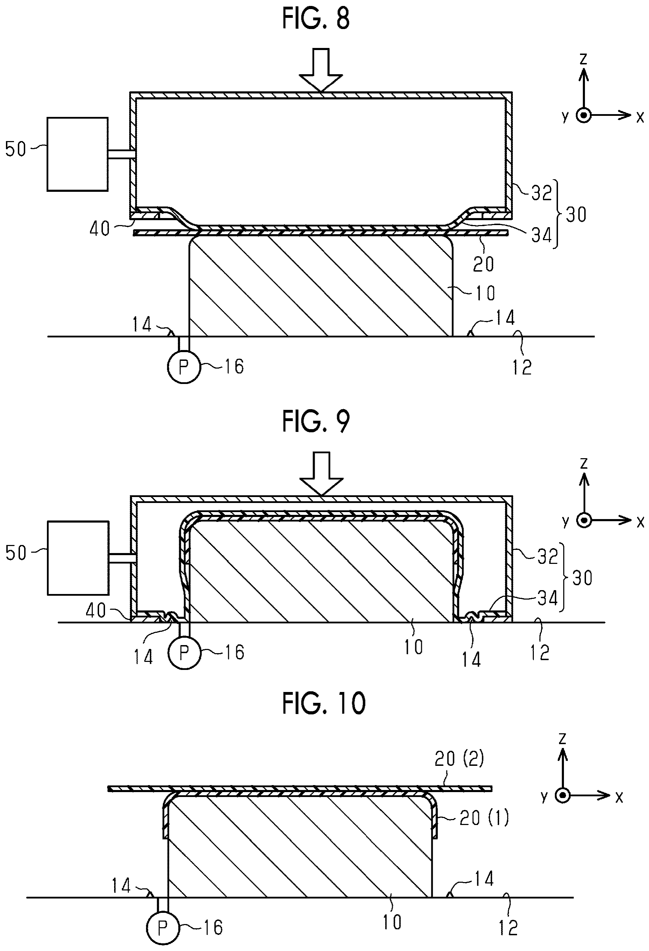

FIG. 8 shows the initial state of the step S14. As shown in FIG. 8, the flexible sheet 34 is pressed against the sheet-like member 20 by the descent of the bladder 30.

Returning to FIG. 4, in a case where the restricting member 40 comes into contact with the floor 12, the control device 60 evacuates the space partitioned by the bladder 30, the floor 12, and the protruding portion 14 by the pump 16 (S16). As a result, the space is depressurized. As a result, the gap between the sheet-like member 20 and the mold tool 10 is reduced to make the sheet-like member 20 conform to the shape of the mold tool 10.

FIG. 9 shows the step S16.

Returning to FIG. 4, the control device 60 determines whether or not the number of the sheet-like members 20 subjected to the processing of S10 to S16 is the predetermined number N (S18). This is because the molded product according to the present embodiment is formed by laminating N pieces of the sheet-like members 20 that are molded. The processing of S10 to S16 is repeated until the number of the sheet-like members 20 is the predetermined number N.

FIG. 10 shows a state in which since the number of the sheet-like members 20 is one in the processing of S18, the processing proceeds to the step S10. As shown in FIG. 10, the sheet-like member 20 (2) is disposed on the sheet-like member 20 (1) molded by the step shown in FIG. 9. The number in parentheses after the sheet-like member 20 is assigned to identify the sheet-like member 20. In particular, the larger the number in parentheses, the later the step in which the member is formed in the forming step.

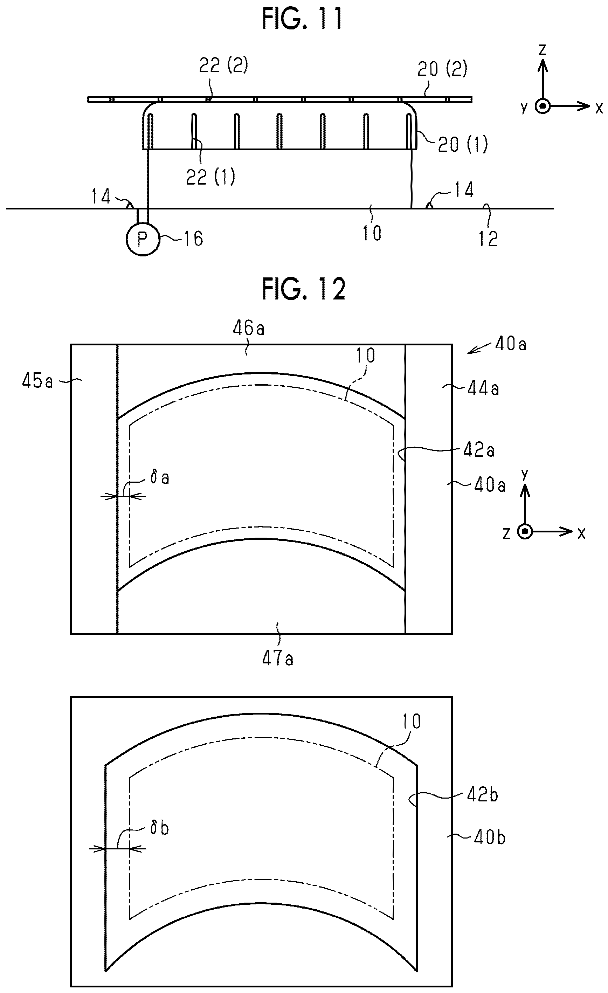

FIG. 11 is a side view of the state shown in FIG. 10. As shown in FIG. 11, the slit 22 (2) of the sheet-like member 20 (2) is provided at a position different from the slit 22 (1) of the sheet-like member 20 (1).

Returning to FIG. 4, in a case in which the control device 60 determines that the number of the sheet-like members 20 is the predetermined number N (S18: YES), the forming step using the mold tool 10 is completed. In the device different from the device shown in FIG. 1, the heat is applied to the sheet-like members 20 laminated in the predetermined number N for curing (S20).

### "Operation and Effect of Present Embodiment"

In a case in which the sheet-like member 20 is disposed on the mold tool 10, the control device 60 supplies the fluid into the bladder 30 above the mold tool 10. As a result, the flexible sheet 34 of the bladder 30 is stretched, and the bladder 30 is expanded. However, the restricting member 40 is provided at the opening portion of the box portion 32 of the bladder 30. As a result, the region in which the bladder 30 is expanded is limited to the opening portion 42 of the restricting member 40.

In a case in which the bladder 30 is expanded, the control device 60 lowers the bladder 30. In this case, the region obtained by vertically projecting the opening portion 42 of the restricting member 40 includes the upper surface of the mold tool 10. Therefore, the flexible sheet 34 protruding from the opening portion 42 is selectively pressed against a portion of the sheet-like member 20 that is in contact with the mold tool 10. Then, as the bladder 30 further descends, the sheet-like member 20 is bent at the edge portion of the region in which the sheet-like member 20 is in contact with the upper surface of the mold tool 10. Then, a portion of the sheet-like member 20 that is not in contact with the upper surface of the mold tool 10 is in contact with the side wall of the mold tool 10.

Then, in a case in which the restricting member 40 comes into contact with the floor 12, the space in which the mold tool 10 and the sheet-like member 20 are accommodated is partitioned by the bladder 30, the protruding portion 14, and the floor 12. By reducing the pressure in the space via the pump 16, the portion of the sheet-like member 20 that is not in contact with the upper surface of the mold tool 10 is brought into close contact with the side surface of the mold tool 10.

As described above, since the pressure can be selectively applied to the sheet-like member 20 from the bladder 30 to molded product the sheet-like member 20, the quality of the molded product can be stabilized even in a case in which the forming is automatically controlled.

With the above-described present embodiment, the following operations and effects can be obtained.

(1-1) The opening portion 42 of the restricting member 40 and the upper surface of the mold tool 10 have similar shapes. As a result, the variation in the distance between the edge portion of the opening portion 42 and the mold tool 10 can be suppressed as much as possible. As a result, a portion of the sheet-like member 20 that protrudes from the upper surface of the mold tool 10 can be uniformly pushed down along with the descent of the bladder 30.

(1-2) The slit 22 is provided in the portion of the sheet-like member 20 that protrudes from the upper surface of the mold tool 10. As a result, the portion of the sheet-like member 20 that protrudes from the mold tool 10 can be easily bent.

(1-3) The slits 22 are provided at different positions between the different sheet-like members 20. As a result, the strength of the molded product can be increased as compared to a case where the slits 22 are the same between the different sheet-like members 20.

### <Second Embodiment>

Hereinafter, regarding a second embodiment, differences from the first embodiment will be mainly described with reference to the drawings.

FIG. 12 shows restricting members 40a and 40b used in the present embodiment. As shown in FIG. 12, the opening portion 42a of the restricting member 40a has a smaller area than the opening portion 42b of the restricting member 40b. FIG. 12 shows that a distance δa between the opening portion 42a and a predetermined portion of the upper surface of the mold tool 10 is smaller than a distance δb between the opening portion 42b and a predetermined portion of the upper surface of the mold tool 10.

The restricting member 40a is separable into a first member 44a, a second member 45a, a third member 46a, and a fourth member 47a.

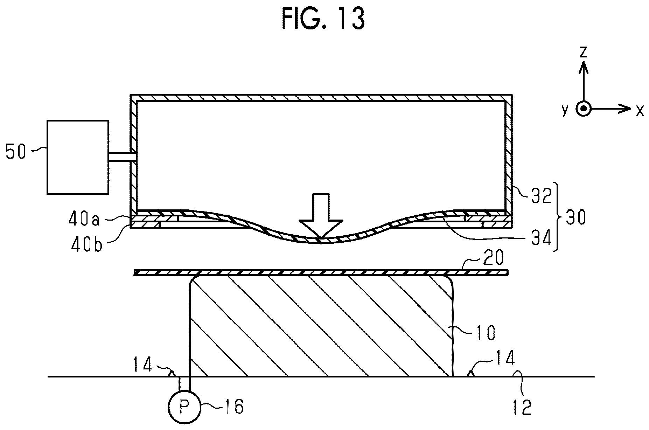

FIG. 13 shows the disposition of the restricting members 40a and 40b. In the example shown in FIG. 13, the restricting member 40a is disposed to face the flexible sheet 34 of the bladder 30. In addition, the restricting member 40b is disposed to face the flexible sheet 34 via the restricting member 40a.

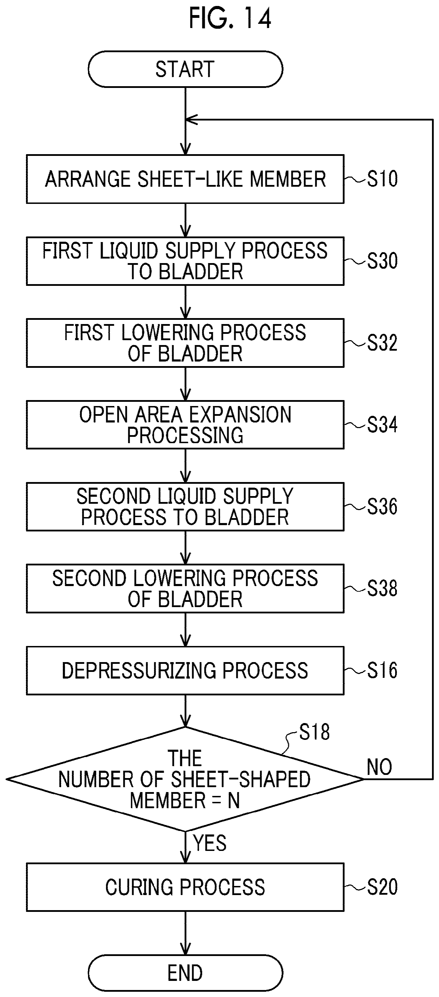

FIG. 14 shows a manufacturing process of the molded product. In FIG. 14, steps corresponding to the steps illustrated in FIG. 3 will be represented by the same step numbers for convenience of description.

In the series of steps shown in FIG. 14, in a case where the step S10 is completed, the control device 60 executes a first treatment of supplying the fluid to the bladder 30 (S30). Then, the control device 60 lowers the bladder 30 by a predetermined amount toward the mold tool 10 (S32). In this step, the restricting member 40b does not contact the floor 12.

Next, the control device 60 enlarges the opening portion by removing the restricting member 40a (S34). In other words, the control device 60 enlarges the region in which the flexible sheet 34 is allowed to expand by the restricting members 40a and 40b. Specifically, the control device 60 displaces the first member 44a of the restricting member 40a in the positive direction of the x-axis and displaces the second member 45a of the restricting member 40a in the negative direction of the x-axis. The control device 60 displaces the third member 46a of the restricting member 40a in the positive direction of the y-axis and displaces the fourth member 47a of the restricting member 40a in the negative direction of the y-axis.

Next, the control device 60 supplies the fluid to the bladder 30 again (S36). Then, the control device 60 lowers the bladder 30 again (S38). In this step, the control device 60 lowers the bladder 30 until the restricting member 40b contacts the floor 12. Then, the control device 60 proceeds to the steps S18 to S20.

With such processing, in the step S32, the pressure in the bladder 30 can be concentratedly applied to a portion of the sheet-like member 20 in contact with the upper surface of the mold tool 10 through the flexible sheet 34. Then, the opening portion that allows the expansion of the flexible sheet 34 is enlarged from the opening portion 42a to the opening portion 42b. Therefore, the flexible sheet 34 and the sheet-like member 20 are easily displaced between the opening portion 42b and the mold tool 10. Therefore, it is easy to form the sheet-like member 20 along the side wall of the mold tool 10.

### <Third Embodiment>

Hereinafter, regarding a third embodiment, differences from the first embodiment will be mainly described with reference to the drawings.

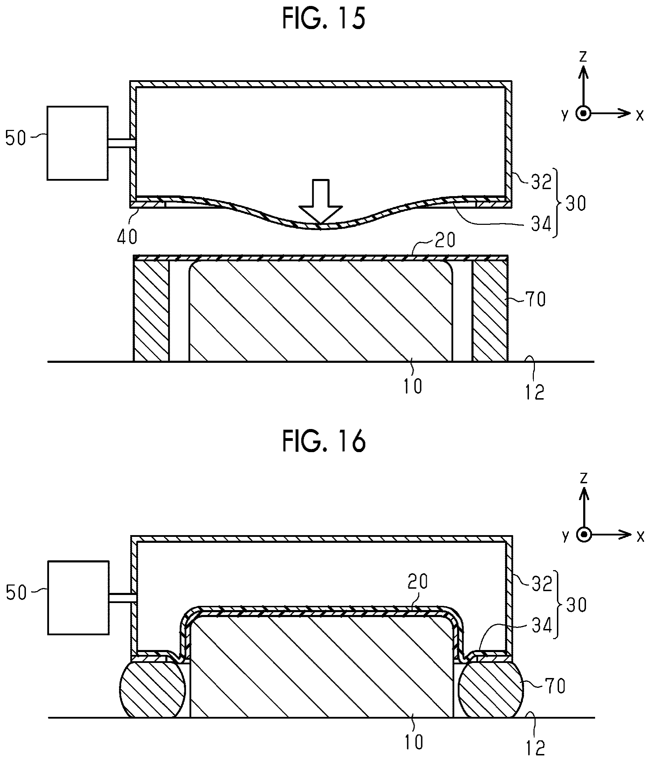

FIG. 15 illustrates the step S10 in the present embodiment. As shown in FIG. 15, in the present embodiment, in a case where the sheet-like member 20 is placed on the mold tool 10, the end part of the sheet-like member 20 is supported by the sponge 70.

FIG. 16 shows the step S14. As shown in FIG. 16, in a case where the bladder 30 is lowered, the restricting member 40 compresses the sponge 70, and thus the upper surface of the sponge 70 is gradually reduced. Therefore, the region of the sheet-like member 20 that protrudes from the upper surface of the mold tool 10 gradually comes into contact with the side wall of the mold tool 10 from the edge portion of the region in contact with the mold tool 10.

Therefore, the occurrence of wrinkles in the sheet-like member 20 can be suppressed. That is, in a case where the sheet-like member 20 is molded in a state where the end part of the sheet-like member 20 comes into contact with the side wall of the mold tool 10 before the edge portion of the region in contact with the mold tool 10, wrinkles are likely to occur in the vicinity of the edge portion of the sheet-like member 20 in contact with the mold tool 10. On the other hand, by disposing the sponge 70, it is possible to suppress the edge portion of the sheet-like member 20 from coming into contact with the side wall of the mold tool 10 before the upper surface of the mold tool 10 of the sheet-like member 20.

### <Fourth Embodiment>

Hereinafter, regarding a fourth embodiment, differences from the first embodiment will be mainly described with reference to the drawings.

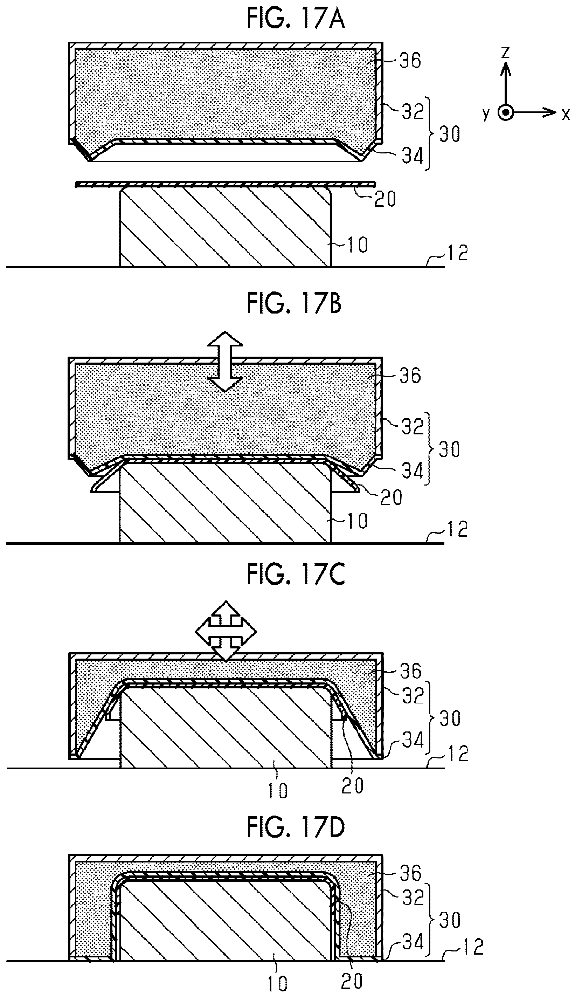

FIGs. 17A to 17D show manufacturing steps of a molded product according to the present embodiment. In FIGs. 17A to 17D, members corresponding to the members shown in FIGs. 6 and the like are designated by the same reference numerals for convenience.

As shown in FIG. 17A, in the present embodiment, the dilatant fluid 36 is filled in the bladder 30 before the bladder 30 is lowered. The dilatant fluid 36 is a fluid that is cured by being subjected to an impact. The dilatant fluid 36 may be, for example, a liquid obtained by dissolving potato starch in water.

FIG. 17B shows an initial stage of the step of lowering the bladder 30. In the present embodiment, the bladder 30 is lowered while the bladder 30 is vibrated up and down. As shown in FIG. 17B, in a case where the flexible sheet 34 comes into contact with a region of the sheet-like member 20 in which the upper surface of the mold tool 10 is in contact with the flexible sheet 34, a force is applied to the dilatant fluid 36 through the flexible sheet 34. As a result, the dilatant fluid 36 is cured from a portion to which the force is applied through the flexible sheet 34.

FIG. 17C shows a later stage of the step of lowering the bladder 30. In the later stage, the bladder 30 is vibrated up, down, left, and right. As a result, a sufficient pressure is applied to the flexible sheet 34 not only in the upper surface of the mold tool 10 but also in a portion of the bladder 30 facing a side surface of the mold tool 10. As a result, the internal dilatant fluid 36 is cured.

FIG. 17D shows a state in which the step of lowering the bladder 30 is completed. In this state, the bladder 30 is stopped.

According to such processing, the portion of the sheet-like member 20 in contact with the upper surface of the mold tool 10 is gradually restricted from being displaced by the bladder 30. Therefore, even in a case where the forming step is automated, the sheet-like member 20 can be stably formed.

### <Correspondence Relationship>

Correspondence relationships between the features in the above-described embodiments and features described in the column "Supplementary Notes" below are as follows. In the following, the correspondence relationship is shown for each number of the solutions described in the "Supplementary Notes" section. [1, 2] The arrangement step corresponds to the step of S10. The supply step corresponds to the step of S12 in FIG. 1 and the steps of S30 and S36 in FIG. 14. The processing target member corresponds to the sheet-like member 20. [3, 4] Corresponds to FIG. 3. [5, 7] The enlargement step corresponds to the step of S34. The restricting member corresponds to the restricting members 40a and 40b. The first descent processing corresponds to the step of S32. The second descent processing corresponds to the step of S38. [6] The first supply step corresponds to the step of S30. The second supply step corresponds to the step of S36. [8] The displaceable member corresponds to the sponge 70. [9] The inspection step corresponds to the step of executing the processing in S16. [10] The control device corresponds to the control device 60.

### <Other Embodiments>

The present embodiment can be implemented by being changed as follows. The present embodiment and the following change examples can be implemented by being combined with each other within a range where there is no technical contradiction.

### "Regarding Depressurization Step"

A depressurization step may be provided in the third embodiment. In this case, it is desirable that the opening portion 42 of the restricting member 40 is located on the outer side with respect to the sponge 70. As a result, the space partitioned by the restricting member 40, the bladder 30, and the floor 12 can be sealed. A protruding portion 14 may be provided on the floor 12.

The depressurization step is not limited to a step of depressurizing the space partitioned by the bladder 30 and the floor 12 by the pump 16 provided below the floor 12. For example, the space may be depressurized by providing a vacuum port of the pump 16 in the mold tool 10 and suctioning a fluid in the space from the vacuum port.

The depressurization step is not essential.

### "Regarding Restricting Member"

### (a) Structure for enlarging opening portion

The structure for enlarging the opening portion of the restricting member is not limited to a structure in which the restricting member comprises two restricting members 40a and 40b having different dimensions of the opening portion. For example, three or more restricting members having different dimensions of the opening portion may be provided.

The structure for enlarging the opening portion of the restricting member is not essential to be a structure in which a plurality of frame-shaped members having different opening portions are provided. For example, the structure for enlarging the opening portion of the restricting member may be realized by a single frame-shaped member having an expandable and contractible opening portion.

### (b) Regarding shape of opening portion

The opening portion 42 of the restricting member 40 is not essential to have a similar shape to the shape of the upper surface of the mold tool 10. For example, in a case where the cross-sectional area of the mold tool 10 increases from the upper surface to the lower surface, the edge portion of the opening portion 42 may have a similar shape to the shape of the outer periphery of the mold tool 10 at a point between the upper surface and a point at which the end portion of the sheet-like member 20 comes into contact with the upper surface.

The restricting member 40 is not limited to a restricting member in which the edge portion of the opening portion 42 has a similar shape to the shape of the outer periphery of the mold tool 10. Even in a case where the shapes are not similar, the shape can be set to correspond to the outer periphery of the mold tool 10, so that the gap between the mold tool 10 and the restricting member 40 can be suppressed from varying depending on the location. In order to suppress the variation, for example, the amount by which the contour of the virtual rectangle VR protrudes into the opening portion 42 with respect to the edge portion of the opening portion 42 of the restricting member 40 may be set as follows. That is, the protrusion amount may be set to be smaller at a portion where the distance between the virtual rectangle VR and the outer periphery of the mold tool 10 is large than at a portion where the distance between the virtual rectangle VR and the upper surface of the mold tool 10 is small.

### "Regarding Descending Operation"

The descending operation is not essential to consist of two operations of a first descending operation and a second descending operation in a case where the restricting member has a structure in which the opening portion is expanded. For example, in a case where the opening portion of the restricting member is expanded in a plurality of stages, three or more descending operations that are divided depending on the timing at which the opening portion is expanded may be provided.

The descending operation is not limited to an operation that is divided by an operation in which the opening portion of the restricting member is expanded. For example, an operation of expanding the opening portion of the restricting member may be provided during one descending operation that is continuously executed.

### "Regarding Supply Step"

The supply step is not essential to consist of two steps of a first supply step and a second supply step in a case where the restricting member has a structure in which the opening portion is expanded. For example, in a case where the opening portion of the restricting member is expanded in a plurality of stages, three or more supply steps that are divided depending on the timing at which the opening portion is expanded may be provided.

Providing an operation of supplying the fluid to the bladder 30 again after the opening portion of the restricting member is expanded is not essential.
· The fluid supplied to the bladder 30 in the supply step may be a dilatant fluid.

### "Regarding Lowerable Member"

The lowerable member that supports the peripheral portion of the processing target member is not essential to be the sponge 70. For example, the lowerable member may be rubber.

### "Regarding Processing Target Member"

The sheet-like member 20 is not limited to a prepreg including a thermosetting resin and carbon fibers. For example, the sheet-like member 20 may include, as inorganic fibers, graphite fibers, silicon carbide fibers, alumina fibers, boron fibers, glass fibers, or the like instead of the carbon fibers. In addition, the fiber member included in the sheet-like member 20 is not essential to be an inorganic fiber. For example, the fiber member included in the sheet-like member 20 may include organic fibers such as aramid fibers and polyethylene fibers.

The resin material included in the sheet-like member 20 is not essential to be a thermosetting resin. For example, the resin material included in the sheet-like member 20 may be a thermoplastic resin. The sheet-like member 20 is not essential to be a prepreg. In addition, the sheet-like member 20 is not essential to be a member including a resin. The sheet-like member 20 may be, for example, a composite material such as a dry fabric that does not include a resin.

In a case where the processing target member is the sheet-like member 20 in which a plurality of sheets are laminated, it is not essential to make the positions of the slits 22 provided in the sheet-like member 20 different for each sheet-like member 20.

In a case where the processing target member is the sheet-like member 20 in which a plurality of sheets are laminated, it is not essential to provide the slits 22 in the sheet-like members 20. In a case where each of the plurality of sheet-like members 20 does not include the slit 22, the strength of the molded product is likely to be increased as compared to a case where the slit 22 is provided.

The processing target member is not essential to be the sheet-like member 20 in which a plurality of sheets are laminated.

### "Regarding Step for Manufacturing Molded Product"

It is not essential that all of the processes of S10 to S18 in FIG. 4 are automated by the manufacturing apparatus. For example, a person may execute the step of S10.

It is not essential that all of the processes of S10, S30 to S38, S16, and S18 in FIG. 14 are automated by the manufacturing apparatus. For example, a person may execute the step of S10.

### "Regarding Manufacturing method of Molded Product"

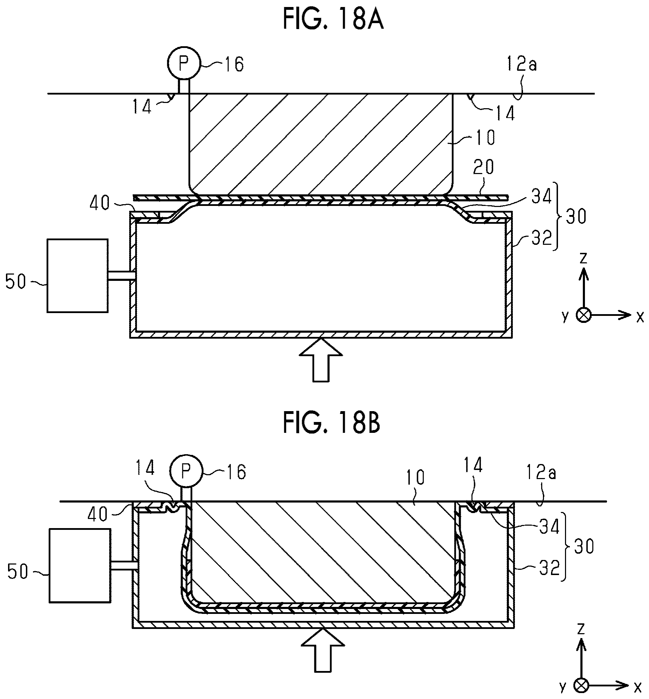

· The arrangement step is not limited to a step of arranging the processing target member on the mold. For example, a step of fixing the mold tool 10 to the ceiling and bringing the sheet-like member 20 into contact with the lower surface of the mold tool 10 may be used as the arrangement step. FIGs. 18A and 18B illustrate a part of the step for manufacturing in this case. FIGs. 18A and 18B illustrate steps corresponding to FIGs. 8 and 9. In the example illustrated in FIGs. 18A and 18B, the mold tool 10 is fixed to the ceiling 12a, and the pump 16 is provided on the ceiling 12a.

However, it is not essential that the mold tool 10 is disposed on the floor 12 or the ceiling 12a. For example, the sheet-like member 20 may be molded in a state where the mold tool 10 is fixed to the side wall of the manufacturing factory. In other words, the displacement direction of the bladder 30 is not limited to the vertical direction, and may be a horizontal direction or the like.

### <Supplementary Notes>

Solution 1. A molded product manufacturing method including: an arrangement step of arranging a workpiece member to come into contact with a surface of a mold tool; a supply step of supplying a fluid to a bladder at a side of the workpiece member opposite to the mold tool; and a displacement step of displacing the bladder toward the workpiece member, in which the workpiece member is a sheet-like member having an area larger than an area of the surface of the mold tool, the bladder includes a box portion made of a rigid body and an opening of the box portion is covered with a sheet-like member that is stretchable, and in the supply step and the displacement step a restricting member is used for suppressing that a region in which the bladder expands protrudes outside a region in which the bladder contacts the workpiece member in accordance with displacement of the bladder.

In the method, the restricting member is used in the displacement stroke and the supply step. Therefore, the variation in the area of the bladder to be expanded, the variation in the area of the member to be processed to which the pressure is applied by the bladder, and the variation in the pressure applied to the member to be processed by the bladder can be suppressed. Therefore, the variation in the forming quality of the member to be processed can be suppressed.

Solution 2. The molded product manufacturing method according to the first aspect, in which the arrangement step is a step of arranging the workpiece member on the mold tool, the supply step is a step of supplying a fluid to the bladder above the workpiece member, the displacement step is a lowering step of lowering the bladder, the workpiece member is a sheet-like member having an area larger than an area of an upper surface of the mold tool, and in the supply step and the lowering step a restricting member is used for suppressing that a region in which the bladder expands protrudes outside a region in which the bladder contacts the workpiece member in accordance with lowering of the bladder.

In the method, the restricting member is used in the lowering stroke and the supply step. Therefore, the variation in the area of the bladder to be expanded, the variation in the area of the member to be processed to which the pressure is applied by the bladder, and the variation in the pressure applied to the member to be processed by the bladder can be suppressed. Therefore, the variation in the forming quality of the member to be processed can be suppressed.

Solution 3. The molded product manufacturing method according to the first or second aspect, in which a length in a direction from an edge of an opening of the restricting member toward an inside of the opening, which is defined as a positive direction, from the edge of the opening toward a contour of a virtual rectangle, is smaller at a position where a distance between the virtual rectangle and an outer periphery of the mold tool is larger than at a position where the distance between the virtual rectangle and the outer periphery of the mold tool is small, and the virtual rectangle is a rectangle in which the outer periphery of the mold tool is inscribed.

In the method, a shape of the edge portion of the opening portion is determined according to the outer peripheral shape of the mold. Therefore, it is possible to suppress the distance between the edge portion of the opening portion and the mold tool from varying depending on the location.

Solution 4. The molded product manufacturing method according to any one of the first to third aspects, in which an edge of the opening of the restricting member and the outer periphery of the mold tool have similar shapes.

According to the above-described configuration, since the opening portion of the frame member and the outer peripheral portion of the mold tool have similar shapes, it is possible to suppress the variation in the distance between the edge portion of the opening portion and the mold.

Solution 5. The molded product manufacturing method according to any one of the second and fourth aspects, in which the restricting member is configured to enlarge the opening of the restricting member, an enlargement step of enlarging the opening of the restricting member is provided, the displacement step includes a first displacement step and a second displacement step, and the enlargement step is executed between the first displacement step and the second displacement step.

In the method, since the enlargement step is included, a region of the processing target member to which the pressure is applied by the blade in a case of before the enlargement step can be accurately determined. In addition, since the interference between the blade and the restricting member can be suppressed after the enlargement step, the blade can be easily displaced.

Solution 6. The molded product manufacturing method according to the fifth aspect, in which the supply step includes a first supply step and a second supply step, the first supply step is executed prior to the first displacement step, and the second supply step is executed between the enlargement step and the second displacement step.

In the method, by executing the second supply step between the enlargement step and the second displacement step, the pressure applied to the processing target member by the blade in the second displacement step can be adjusted.

Solution 7. The molded product manufacturing method according to the fifth or sixth aspect, in which the restricting member includes a first restricting member and a second restricting member, an opening of the first restricting member is smaller than an opening of the second restricting member, and the enlargement step is a step of removing the first restricting member after the sheet-like member of the bladder is suppressed protruding outside a region where the bladder contacts the workpiece member by the first and second restricting members.

In the method, the enlargement step can be realized by using the first restricting member and the second restricting member.

Solution 8. The molded product manufacturing method according to any one of the first to seventh aspects, in which the arrangement step is executed in a state in which a displaceable member that supports a peripheral portion of the workpiece member is arranged around the mold tool, and the displaceable member is a member capable of reducing a length in a displacement direction of the bladder.

In the method, the arranging step is executed in a state in which the peripheral portion of the processing target member is supported by the displaceable member. Therefore, as the blade is displaced, the displaceable member gradually contracts in length. As a result, the position of the peripheral portion of the processing target member approaches a surface that supports the mold tool and moves away from the displaceable member, and comes into contact with the side wall of the mold tool. Therefore, the peripheral portion of the processing target member can finally come into contact with the mold tool. As a result, it is possible to suppress the occurrence of wrinkles in the processing target member.

Solution 9. The molded product manufacturing method according to any one of the first to eighth aspects, further including: a step of depressurizing a space formed in association with the displacement step and defined by the surface on which the mold tool is supported and the bladder.

In the method, by reducing the pressure in the space, the processing target member can be adapted to a shape of the molded product.

Solution 10. A molded product manufacturing apparatus, including: the bladder used in the molded product manufacturing method according to any one of the first to ninth aspects, and the molded product; and a control device that controls the supply step and the displacement step.

## Claims

1. A molded product manufacturing method comprising:
an arrangement step of arranging a workpiece member to come into contact with a surface of a mold tool;
a supply step of supplying a fluid to a bladder at a side of the workpiece member opposite to the mold tool; and
a displacement step of displacing the bladder toward the workpiece member,
wherein the workpiece member is a sheet-like member having an area larger than an area of the surface of the mold tool,
the bladder includes a box portion made of a rigid body and an opening of the box portion is covered with a sheet-like member that is stretchable, and
in the supply step and the displacement step a restricting member is used for suppressing that a region in which the bladder expands protrudes outside a region in which the bladder contacts the workpiece member in accordance with displacement of the bladder.

2. The molded product manufacturing method according to claim 1,
wherein the arrangement step is a step of arranging the workpiece member on the mold tool,
the supply step is a step of supplying a fluid to the bladder above the workpiece member,
the displacement step is a lowering step of lowering the bladder,
the workpiece member is a sheet-like member having an area larger than an area of an upper surface of the mold tool, and
in the supply step and the lowering step a restricting member is used for suppressing that a region in which the bladder expands protrudes outside a region in which the bladder contacts the workpiece member in accordance with lowering of the bladder.

3. The molded product manufacturing method according to claim 1,
wherein a length in a direction from an edge of an opening of the restricting member toward an inside of the opening, which is defined as a positive direction, from the edge of the opening toward a contour of a virtual rectangle, is smaller at a position where a distance between the virtual rectangle and an outer periphery of the mold tool is larger than at a position where the distance between the virtual rectangle and the outer periphery of the mold tool is small, and
the virtual rectangle is a rectangle in which the outer periphery of the mold tool is inscribed.

4. The molded product manufacturing method according to claim 3,
wherein an edge of the opening of the restricting member and the outer periphery of the mold tool have similar shapes.

5. The molded product manufacturing method according to claim 1,
wherein the restricting member is configured to enlarge the opening of the restricting member,
an enlargement step of enlarging the opening of the restricting member is provided,
the displacement step includes a first displacement step and a second displacement step, and
the enlargement step is executed between the first displacement step and the second displacement step.

6. The molded product manufacturing method according to claim 5,
wherein the supply step includes a first supply step and a second supply step,
the first supply step is executed prior to the first displacement step, and
the second supply step is executed between the enlargement step and the second displacement step.

7. The molded product manufacturing method according to claim 5,
wherein the restricting member includes a first restricting member and a second restricting member,
an opening of the first restricting member is smaller than an opening of the second restricting member, and
the enlargement step is a step of removing the first restricting member after the sheet-like member of the bladder is suppressed protruding outside a region where the bladder contacts the workpiece member by the first and second restricting members.

8. The molded product manufacturing method according to claim 1,
wherein the arrangement step is executed in a state in which a displaceable member that supports a peripheral portion of the workpiece member is arranged around the mold tool, and
the displaceable member is a member capable of reducing a length in a displacement direction of the bladder.

9. The molded product manufacturing method according to claim 1, further comprising:
a step of depressurizing a space formed in association with the displacement step and defined by the surface on which the mold tool is supported and the bladder.

10. A molded product manufacturing apparatus, comprising:
the bladder used in the molded product manufacturing method according to claim 1, and
the molded product; and
a control device that controls the supply step and the displacement step.
